# EUROPÄISCHE PATENTSCHRIFT

(11) **EP 3 708 420 B1**
(45) Veröffentlichungstag und Bekanntmachung des Hinweises auf die Patenterteilung: **19.01.2022**
(21) Anmeldenummer: 20163045.6
(22) Anmeldetag: 13.03.2020
(51) Int. Cl.: B60N 2/28

(54) **KINDERSITZ FÜR EIN KRAFTFAHRZEUG**
CHILD SEAT FOR A MOTOR VEHICLE
SIÈGE AUTO POUR UN VÉHICULE AUTOMOBILE

(30) Priorität: 13.03.2019 DE 102019106460
(43) Veröffentlichungstag der Anmeldung: 16.09.2020
(73) Patentinhaber: Avova GmbH, 89077 Ulm (DE)
(72) Erfinder: Held, Manfred Ulrich, 89165 Dietenheim (DE)
(74) Vertreter: Meyer, Thorsten

(56) Entgegenhaltungen:
- EP-A1- 2 664 491
- EP-A2- 0 714 806
- EP-A2- 1 083 084
- WO-A1-2012/172001
- US-A1- 2006 103 515

## Beschreibung

Die Erfindung betrifft einen Kindersitz für ein Kraftfahrzeug mit einer Indikatorvorrichtung zur Anzeige der ordnungsgemäßen Zusammenwirkung einer Isofix-Arretiereinrichtung.

Für herausnehmbare Kindersitze in Kraftfahrzeugen gibt es eine normierte Arretierungseinrichtung mit der Bezeichnung Isofix. Dabei wird ein mit dem Kindersitz verbundenes Befestigungs-Teil mit einem entsprechenden Anker am Fahrzeug lösbar verbunden.

Für die Befestigungs-Teile gibt es verschiedene bekannte Lösungen am Markt.

Beim Stand der Technik ist es dabei jedoch nachteilig, dass die korrekte Verbindung, also die Arretierung, des Befestigungs-Teils am Kindersitz mit dem oft hinter dem eingebauten Kindersitz liegenden Anker nicht sichtbar oder durch den Bediener feststellbar ist.

Aus der EP 2664491A1 ist eine Stützbasis für einen Kindersicherheitssitz mit einen Schalenkörper, einem verstellbaren Arm, der mit dem Schalenkörper zusammengebaut ist und ein hinteres Ende aufweist, bekannt, das mit einem Befestigungselement versehen ist, das mit einer Verankerungsvorrichtung eines Fahrzeugs verbunden werden kann, ein Sicherheitsschloss und einen Kupplungsabschnitt, der durch das Innere des verstellbaren Arms hindurch montiert ist. Der Schalenkörper ist entlang des verstellbaren Arms bewegbar, um einen Abstand zwischen dem Befestigungselement und einer Rückseite des Schalenkörpers einzustellen.

Aufgabe der Erfindung ist es einen verbesserten Kindersitz zur Anzeige der ordnungsgemäßen Zusammenwirkung einer Isofix-Arretiereinrichtung zur Verfügung zu stellen.

Diese Aufgabe wird durch einen Kindersitz für ein Kraftfahrzeug mit einer Indikatorvorrichtung nach den Merkmalen des Anspruchs 1 gelöst.

Erfindungsgemäß ist Kindersitz für ein Kraftfahrzeug mit einer Indikatorvorrichtung zur Anzeige der ordnungsgemäßen Zusammenwirkung einer Isofix-Arretiereinrichtung des Kindersitzes mit einer Isofix-Verbindung des Kraftfahrzeugs, dergestalt vorgesehen, dass am Kindersitz ein Betätigungshebel zur Lösung einer im Kindersitz ausgebildeten Isofix-Arretiereinrichtung mittels einer Seilzugvorrichtung angeordnet ist, wobei der Betätigungshebel direkt oder indirekt einen im Kindersitz gelagerten Nocken von einer Arretierstellung in eine Lösestellung verschwenkt, wobei an einem Arm des Nockens das Zugseil der Seilzugvorrichtung befestigt ist welches bei Verschwenken des Nockens durch Spannen des Zugseils die Isofix-Arretiereinrichtung löst und die Isofix-Verbindung zum Kraftfahrzeug frei gibt, wobei der Nocken in der Arretierstellung mit einem Arm auf einen im Kindersitz angeordneten, um eine Achse drehbaren, Hebel wirkt, dessen freies, dem Nocken abgewandtes Ende in Arretierstellung durch eine Öffnung im Gehäuse des Kindersitzes von außen sichtbar ist, in Lösestellung aber von der Öffnung weggeschwenkt ist.

Hierdurch ist auf besonders effektive Weise die Anzeige der korrekten Arretierung des Isofix-Systems ermöglicht und dies einfach an der Vorderseite des Kindesitzes nachdem dieser in Position gebracht wurde.

Weiterhin ist vorgesehen, dass der Betätigungshebel beim Verschwenken von der Arretierstellung in die Lösestellung zuerst einen in dem Kindersitz verschieblich gelagerten Isofix-Rast-Arm, in oder an welchem die Isofix-Arretiereinrichtung ausgebildet ist, aus einer Klemmung oder Verrastung der vorgewählten Ausziehlänge am Kindersitz aus einer Rastarm-Führung freigibt.

Das Verriegeln des Isofix-Arretiereinrichtung ruft von Vorteil eine Verkürzung des Seilzugs der Seilzugvorrichtung hervor wodurch der Nocken mit seinem Arm den Hebel betätigt, so dass das abgewandte Ende in der Öffnung des Gehäuses sichtbar wird.

Eine sehr vorteilhafte Ausgestaltung der Erfindung sieht vor, dass der Betätigungshebel beim Verschwenken von der Arretierstellung in die Lösestellung zusätzlich einen in dem Kindersitz verschieblich gelagerten Isofix-Rast-Arm, in oder an welchem die Isofix-Arretiereinrichtung ausgebildet ist, aus einer Klemmung oder Verrastung der vorgewählten Ausziehlänge am Kindersitz freigibt.

Zur Verhinderung von Klemmungen ist von Vorteil der Betätigungshebel mit dem Nocken über ein Pleuel verbunden.

Vorteilhafterweise ist der Isofix-Rast-Arm in der Rastarm-Führung federvorgespannt gelagert und kann nach Freigabe nach Außen ausfahren.

Bevorzugterweise ist vorgesehen, dass nach dem Verriegeln der Isofix-Arretiereinrichtung der Isofix-Rast-Arm über eine Rast-Verbindung mit mehreren Stufen nach innen ins Gehäuse zur Verkürzung desselben nach innen geschoben und damit verkürzt werden kann, wobei eine Bewegung zurück nach Außen gesperrt ist.

Eine besonders bevorzugte Ausgestaltung der Erfindung sieht vor, dass eine erneute Betätigung des Betätigungshebels die Isofix-Arretiereinrichtung entriegelt, wobei die Indikatorvorrichtung mit ihrem abgewandtes Ende die Freigabe durch Wegschwenken aus der Öffnung anzeigt, wobei das Wegschwenken vermittels der mit der Freigabe verursachten Verlängerung der Seilzugvorrichtung dadurch bewirkt wird, dass der Nocken mit seinem Arm den Hebel frei gibt und die Indikatorvorrichtung dadurch wegschwenken kann.

Ein großen Vorteil der Erfindung ist, dass die gesamte Verriegelung durch einen Betätigungshebel erfolgt. Sowohl Freigabe des Arm als auch Entriegelung nach Verrasten. Die Indikator-Anzeige zeigt den Status dabei immer korrekt an.

Nachfolgend wird die Erfindung anhand der Zeichnungen weiter erläutert. Im Einzelnen zeigt die schematische Darstellung in:
- Fig. 1: eine schematische Ansicht eines erfindungsgemäßen Kindesitzes mit Isofix-Arretiereinrichtung und Indikatorvorrichtung,
- Fig. 2: eine schematische Ansicht von unten auf den Kindesitz aus Fig. 1 mit geöffnetem Mechanismus der Isofix-Arretiereinrichtung und Indikatorvorrichtung,
- Fig. 3: eine Detaildarstellung des Bereichs III aus Fig. 2,
- Fig. 4: eine weitere Detaildarstellung der Indikatorvorrichtung aus Fig. 2 in einer ersten Stellung "gelöst",
- Fig. 5: eine weitere Detaildarstellung der Indikatorvorrichtung aus Fig. 2 in einer zweiten Stellung "arretiert",
- Fig. 6: eine schematische Schnitt-Darstellung des in Fig. 5 gezeigten Bereichs der Indikatorvorrichtung Blickrichtung A-A aus Fig. 5,
- Fig. 7: eine Detaildarstellung entsprechend Fig. 5, wobei der Betätigungshebel zur Freigabe der Isofix-Verbindung gezogen ist,
- Fig. 8: eine Ansicht des unteren Bereichs des Kindesitzes, und
- Fig. 9: im Detail den Bereich IX aus Fig. 8 mir der Indikatorvorrichtung.

Die in den Figuren gleichen Bezugsziffern bezeichnen gleiche oder gleich wirkende Elemente.

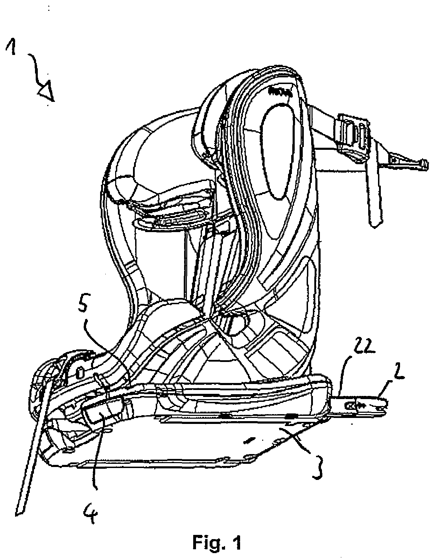

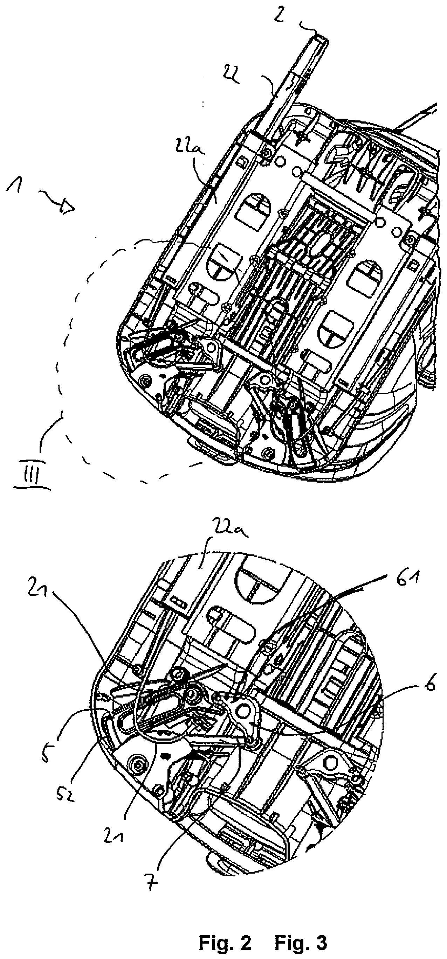

In Fig. 1 ist der erfindungsgemäße Kindersitz 1 für ein Kraftfahrzeug mit einer Indikatorvorrichtung 5 zur Anzeige der ordnungsgemäßen Zusammenwirkung einer Isofix-Arretiereinrichtung 2 des Kindersitzes 1 mit einer Isofix-Verbindung des Kraftfahrzeugs gezeigt. Fig. 2 zeigt den Sitz von unten geöffnet.

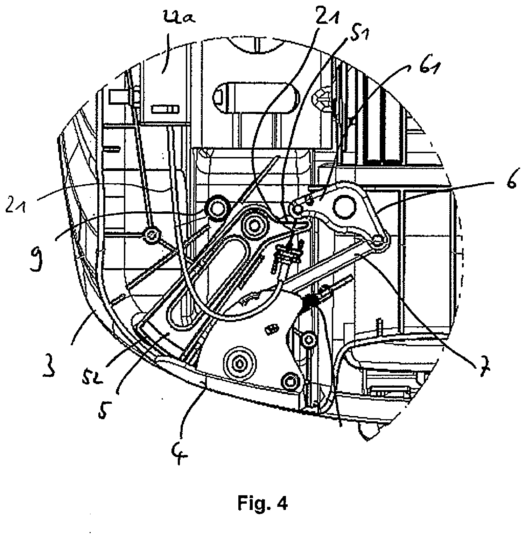

Die Bedienung der Isofix-Arretiereinrichtung erfolgt dabei einen am Kindersitz angeordneten Betätigungshebel 4 der zur Lösung einer im Kindersitz ausgebildeten Isofix-Arretiereinrichtung 2 mittels einer Seilzugvorrichtung 21 verbunden ist. Siehe hierzu Fig. 2 und die Detaildarstellungen nach Fig. 3 bis 9.

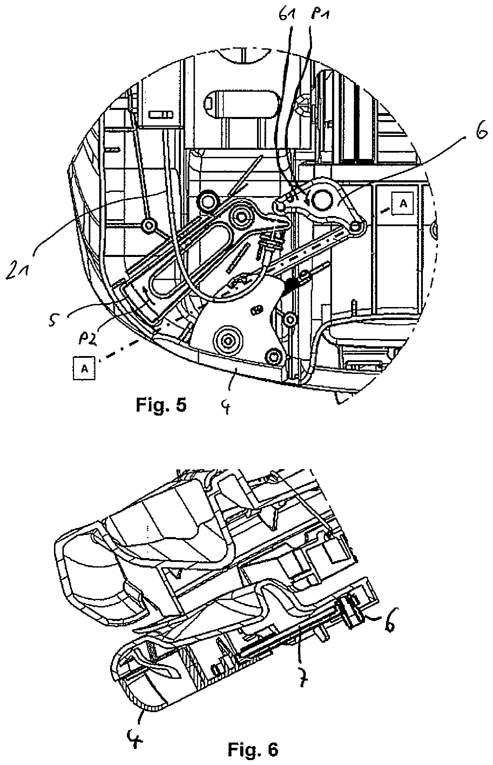

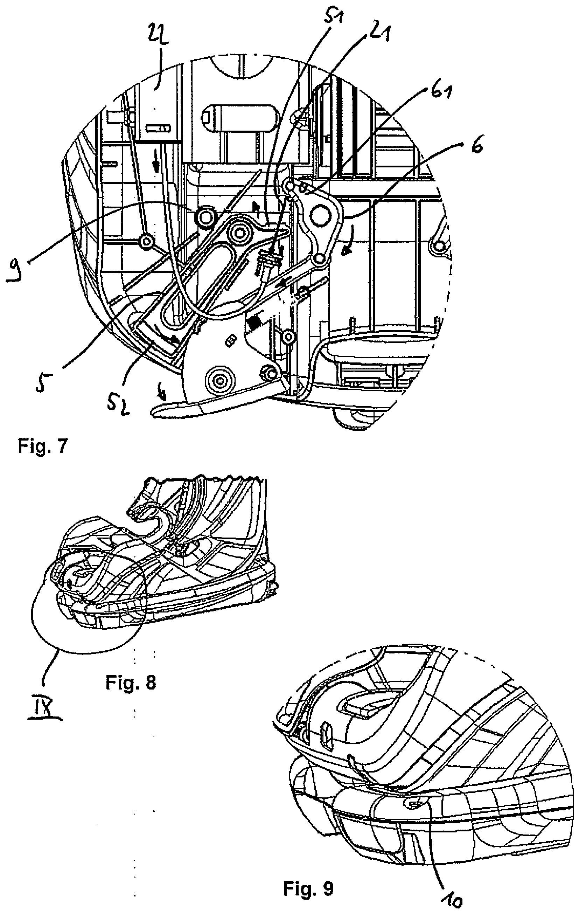

Der Betätigungshebel 4 verschwenkt bei Auslenken desselben durch einen Bediener im Beispiel indirekt einen im Kindersitz gelagerten Nocken 6 von einer Arretierstellung in eine Lösestellung (siehe Fig. 5, Pfeil P1 und P2, und Fig. 7).

Fig. 6 zeigt eine Schnitt-Darstellung in Blickrichtung A-A aud Fig. 5.

Dabei ist ein an einem Arm 61 des Nockens 6 befestigtes Zugseil der Seilzugvorrichtung 21 vorgesehen, welches bei Verschwenken des Nockens 6 durch Spannen des Zugseils die Isofix-Arretiereinrichtung 2 löst und die Isofix-Verbindung zum Kraftfahrzeug frei gibt.

Der Nocken 6 wirkt in der Arretierstellung mit einem Arm 61 auf einen im Kindersitz angeordneten, um eine Achse drehbaren Hebel 51, dessen freies, dem Nocken abgewandtes Ende 52 in Arretierstellung durch eine Öffnung 10 im Gehäuse 3 des Kindersitzes 1 von außen sichtbar ist, in Lösestellung aber von der Öffnung weggeschwenkt ist. Es kann auch vorgesehen sein, dass ein in Arretierstellung sichtbarer Teil des Hebels 51 in der einen anderen Farbe (beispielsweise grün) gehalten ist als der Teil der in der Lösestellung durch die Öffnung 10 durch die Verschenkung sichtbar ist (beispielsweise grau).

Der Betätigungshebel 4 gibt beim Verschwenken von der Arretierstellung in die Lösestellung zusätzlich einen in dem Kindersitz 1 in einer Rastarm-Führung 22a verschieblich gelagerten Isofix-Rast-Arm 22 aus einer Klemmung oder Verrastung der vorgewählten Ausziehlänge am Kindersitz 1 frei. In dem Isofix-Rast-Arm 22 ist an dessen äußeren Ende die Isofix-Arretiereinrichtung 2 ausgebildet.

### Bezugszeichenliste

- 1: Kindersitz

- 10: Öffnung

- 2: Isofix-Arretiereinrichtung
- 21: Seilzugvorrichtung
- 22: Isofix-Rast-Arm
- 22a: Rastarm-Führung

- 3: Gehäuse

- 4: Betätigungshebel

- 5: Indikatorvorrichtung
- 51: Hebel
- 52: abgewandtes Ende

- 6: Nocken
- 61: Arm

- 7: Pleuel

## Patentansprüche

1. Kindersitz (1) für ein Kraftfahrzeug mit einer Indikatorvorrichtung (5; 51, 10) zur Anzeige der ordnungsgemäßen Zusammenwirkung einer Isofix-Arretiereinrichtung (2) des Kindersitzes (1) mit einer Isofix-Verbindung des Kraftfahrzeugs, wobei am Kindersitz ein Betätigungshebel (4) zur Lösung einer im Kindersitz ausgebildeten Isofix-Arretiereinrichtung (2) mittels einer Seilzugvorrichtung (21) angeordnet ist,
wobei der Betätigungshebel (4) direkt oder indirekt einen im Kindersitz gelagerten Nocken (6) von einer Arretierstellung in eine Lösestellung verschwenkt,
wobei an einem Arm (61) des Nockens (6) das Zugseil der Seilzugvorrichtung (21) befestigt ist welches bei Verschwenken des Nockens (6) durch Spannen des Zugseils die Isofix-Arretiereinrichtung (2) löst und die Isofix-Verbindung zum Kraftfahrzeug frei gibt,
wobei der Nocken (6) in der Arretierstellung mit einem Arm (61) auf einen im Kindersitz angeordneten, um eine Achse drehbaren, Hebel (51) wirkt, dessen freies, dem Nocken abgewandtes Ende (52) in Arretierstellung durch eine Öffnung (10) im Gehäuse (3) des Kindersitzes (1) von außen sichtbar ist, in Lösestellung aber von der Öffnung weggeschwenkt ist, wobei der Betätigungshebel (4) beim Verschwenken von der Arretierstellung in die Lösestellung zuerst einen in dem Kindersitz (1) verschieblich gelagerten Isofix-Rast-Arm (22), in oder an welchem die Isofix-Arretiereinrichtung (2) ausgebildet ist, aus einer Klemmung oder Verrastung der vorgewählten Ausziehlänge am Kindersitz (1) aus einer Rastarm-Führung (22a) freigibt,
wobei das Verriegeln des Isofix-Arretiereinrichtung (2) eine Verkürzung des Seilzugs der Seilzugvorrichtung (21) hervorruft wodurch der Nocken (6) mit seinem Arm 61 den Hebel (51) betätigt, so dass das abgewandte Ende (52) in der Öffnung (10) des Gehäuses (3) sichtbar wird.

2. Kindersitz nach Anspruch 1,
**dadurch gekennzeichnet,**
**dass** der Betätigungshebel (4) mit dem Nocken (6) über ein Pleuel verbunden ist.

3. Kindersitz nach Anspruch 1,
**dadurch gekennzeichnet,**
**dass** der Isofix-Rast-Arm (22) in der Rastarm-Führung (22a) federvorgespannt gelagert ist und nach Freigabe nach Außen fahren kann.

4. Kindersitz nach Anspruch 1, 2 oder 3,
**dadurch gekennzeichnet,**
**dass** nach dem Verriegeln der Isofix-Arretiereinrichtung (2) der Isofix-Rast-Arm (22) über eine Rast-Verbindung nach innen ins Gehäuse (3) zur Verkürzung desselben nach innen geschoben werden kann, wobei eine Bewegung zurück nach Außen gesperrt ist.

5. Kindersitz nach Anspruch 4,
**dadurch gekennzeichnet,**
**dass** eine erneute Betätigung des Betätigungshebels (4) die Isofix-Arretiereinrichtung (2) entriegelt,
wobei die Indikatorvorrichtung (5) mit ihrem abgewandtes Ende (52) die Freigabe durch Wegschwenken aus der Öffnung (10) anzeigt,
wobei das Wegschwenken vermittels der mit der Freigabe verursachten Verlängerung der Seilzugvorrichtung (21) dadurch bewirkt wird, dass der Nocken mit seinem Arm (61) den Hebel (51) frei gibt und die Indikatorvorrichtung (5) dadurch wegschwenken kann.

## Claims

1. Child seat (1) for a motor vehicle having an indicator device (5; 51, 10) for displaying a correct interaction of an Isofix catch (2) of the child seat (1) with an Isofix connection of the motor vehicle, wherein an actuating lever (4) for releasing, by means of a cable pull device (21), an Isofix catch (2) embodied in the child seat is configured on the child seat,
wherein the actuating lever (4) directly or indirectly pivots a cam (6) mounted in the child seat from a locking position to a release position,
the pull cable of the cable pull device (21) being mounted to an arm (61) of the cam (6), wherein the pull cable releases the Isofix catch (2) and frees the Isofix connection to the motor vehicle when pivoting the cam (6) by tensioning the pull cable,
in the locking position, the cam (6) acts with an arm (61) upon a lever (51) being configured in the child seat and rotatable about an axis, the free end (52) of which, remote from the cam, is visible from the outside through an opening (10) in the shell (3) of the child seat (1), but is pivoted away from the opening in the release position,
the actuating lever (4), when being pivoted from the locking position to the release position, first releases an Isofix locking arm (22), which is displaceably mounted in the child seat (1) and in or on which the Isofix catch (2) is formed, from a clamped or latched position of the preselected extension length on the child seat (1) from a locking arm guide (22a),
wherein the locking of the Isofix catch (2) causes a shortening of the cable pull of the cable pull device (21), whereby the cam (6) actuates the lever (51) with its cam arm (61), such that the remote end (52) becomes visible in the opening (10) of the shell (3).

2. Child seat according to claim 1,
**characterized in that**
the actuating lever (4) is connected with the cam (6) via a connecting rod.

3. Child seat according to claim 1,
**characterized in that**
the Isofix locking arm (22) is spring biased in the locking arm guide (22a) and is able to move outwards after it has been released.

4. Child seat according to claim 1, 2, or 3,
**characterized in that**
after locking the Isofix catch (2), the Isofix locking arm (22) may be pushed inwards into the shell (3) via a locking connection for shortening it, wherein a movement back outwards is blocked.

5. Child seat according to claim 4,
**characterized in that**
a repeated operation of the actuating lever (4) unlocks the Isofix catch (2),
wherein the indicator device (5) displays the release with its remote end (52) by pivoting away from the opening (10),
the pivoting away via the extension of the cable pull device (21) caused by the release is brought about by the cam releasing the lever (51) with its cam arm (61), whereby the indicator device (5) is able to pivot away.

## Revendications

1. Siège auto (1) pour un véhicule automobile avec un dispositif indicateur (5 ; 51, 10) pour l'affichage de la coopération conforme aux règles d'un dispositif d'arrêt Isofix (2) du siège auto (1) avec une connexion Isofix du véhicule automobile, dans lequel un levier d'actionnement (4) pour le desserrage d'un dispositif d'arrêt Isofix (2) réalisé dans le siège auto est disposé sur le siège auto au moyen d'un dispositif de commande par câble (21), dans lequel le levier d'actionnement (4) fait pivoter directement ou indirectement un taquet (6) logé dans le siège auto d'une position d'arrêt dans une position de desserrage,
dans lequel le câble tracteur du dispositif de commande par câble (21) est fixé à un bras (61) du taquet (6), lequel desserre le dispositif d'arrêt Isofix (2) lors du pivotement du taquet (6) par tension du câble tracteur et libère la connexion Isofix vers le véhicule automobile,
dans lequel le taquet (6) agit dans la position d'arrêt avec un bras (61) sur un levier (51) disposé dans le siège auto, rotatif autour d'un axe dont l'extrémité libre (52), détournée du taquet, est visible de l'extérieur dans la position d'arrêt à travers une ouverture (10) dans le logement (3) du siège auto (1), mais est pivotée à l'écart de l'ouverture dans la position de desserrage,
dans lequel le levier d'actionnement (4) libère d'abord un bras d'encliquetage Isofix (22) logé à coulissement dans le siège auto (1), dans ou sur lequel le dispositif d'arrêt Isofix (2) est réalisé, d'un serrage ou encliquetage de la longueur d'étirement présélectionnée sur le siège auto (1) hors d'un guidage de bras d'encliquetage (22a) lors du pivotement de la position d'arrêt dans la position de desserrage,
dans lequel le verrouillage du dispositif d'arrêt Isofix (2) génère un raccourcissement du câble tracteur du dispositif de commande par câble (21), moyennant lequel le taquet (6) actionne le levier (51) avec son bras (61) de sorte que l'extrémité détournée (52) est visible dans l'ouverture (10) du logement (3).

2. Siège auto selon la revendication 1,
**caractérisé en ce**
**que** le levier d'actionnement (4) est connecté au taquet (6) par le biais d'une bielle.

3. Siège auto selon la revendication 1,
**caractérisé en ce**
**que** le bras d'encliquetage Isofix (22) est logé de manière précontrainte par un ressort dans le guidage de bras d'encliquetage (22a) et peut se déplacer vers l'extérieur après libération.

4. Siège auto selon la revendication 1, 2 ou 3,
**caractérisé en ce**
**que** le bras d'encliquetage Isofix (22) peut être poussé vers l'intérieur par le biais d'une connexion d'encliquetage vers l'intérieur dans le logement (3) pour le raccourcissement de celui-ci après le verrouillage du dispositif d'arrêt Isofix (2), dans lequel un déplacement de retour vers l'extérieur est bloqué.

5. Siège auto selon la revendication 4,
**caractérisé en ce**
**qu'**un nouvel actionnement du levier d'actionnement (4) déverrouille le dispositif d'arrêt Isofix (2),
dans lequel le dispositif indicateur (5) affiche avec son extrémité détournée (52) la libération par pivotement à l'écart de l'ouverture (10),
dans lequel le pivotement à l'écart est entraîné par l'intermédiaire du prolongement provoqué avec la libération du dispositif de commande par câble (21) en ce que le taquet libère le levier (51) avec son bras (61) et le dispositif indicateur (5) peut pivoter à l'écart de ce fait.
